# DEMANDE DE BREVET EUROPEEN

(11) **EP 0 684 498 A1**
(43) Date de publication de la demande: **29.11.1995**
(21) Numéro de dépôt: 95401109.4
(22) Date de dépôt: 12.05.1995
(51) Int. Cl.: G02B 27/00, B64D 47/08

(54) **Dispositif d'amélioration du champ de vision d'aéronefs ne présentant pas une surface vitrée suffisante**

(30) Priorité: 27.05.1994 FR 9406462
(71) Demandeur: SEXTANT AVIONIQUE, F-92360 Meudon-la-Forêt (FR)
(72) Inventeur: Faivre, François, F-92402 Courbevoie Cédex (FR); Parus, Roger, F-92402 Courbevoie Cédex (FR)
(74) Mandataire: Benoit, Monique

(57) **Abrégé**

L'invention concerne un dispositif d'amélioration du champ de vision d'aéronefs ne présentant pas une surface vitrée suffisante.

Le dispositif est constitué au moins d'un collimateur (31, 32) relié à un capteur d'imagerie de l'espace extérieur. Le collimateur projette une image (34) dans le champ de vision du pilote, cette image chevauchant la surface vitrée (6) et le tableau de bord (5) du cockpit. L'image du cockpit coïncide avec l'image réelle dans le champ de vision directe produit par la surface vitrée (6).

Application : sécurisation de la phase d'atterrissage.

## Description

La présente invention concerne un dispositif d'amélioration du champ de vision d'aéronefs ne présentant pas une surface vitrée suffisante. Elle s'applique notamment aux aéronefs dont la surface vitrée disponible à l'avant ne permet pas au pilote d'avoir une vision suffisante pour assurer un atterrissage.

Une nouvelle génération d'avions civils supersoniques est en préparation. Ces avions ont en commun entre eux, et avec la génération précédente, notamment le Concorde, d'avoir une incidence élevée en approche de terrain. Cela rend difficile la vision vers le bas à travers les surfaces vitrées. L'option du nez basculant, adoptée pour Concorde, est maintenant rejetée pour des raisons économiques. Par ailleurs, la forme de ces avions est imposée par des contraintes aérodynamiques. Ces contraintes entraînent notamment le fait que les surfaces vitrées disponibles ne permettent pas de couvrir le bon champ en phase d'atterrissage.

Ces avions pourront donc, soit à la limite ne disposer d'aucune surface vitrée, soit ne disposer que d'une surface vitrée donnant un champ de vision vers le haut seulement.

Des solutions pour améliorer le champ de vision sont utilisées sur des avions traditionnels, essentiellement pour des vols de nuit ou par mauvaises conditions de visibilité.

Une solution connue reconstitue par exemple une image artificielle du monde extérieur sur une visualisation à partir de capteurs d'énergie et/ou par synthèse à partir d'une base de données.

Une image est quelquefois présentée dans un collimateur tête haute. L'image collimatée, conforme au monde extérieur est superposée optiquement à celui-ci, couvrant une partie des surfaces transparentes du cockpit.

Ces solutions connues ne sont pas adaptées aux futurs avions supersoniques car si elles permettent d'améliorer la vision dans le champ de vision existant, notamment celui fourni par les surfaces vitrées, elles ne permettent pas d'améliorer le champ de vision en conservant la conformité de la présentation quand la surface transparente devient insuffisante.

Le but de l'invention est de pallier cet inconvénient.

A cet effet, l'invention a pour objet un dispositif d'amélioration du champ de vision d'un pilote d'aéronef, caractérisé en ce qu'il est constitué au moins d'un collimateur relié à un capteur d'imagerie de l'espace extérieur, le collimateur projetant une image dans le champ de vision du pilote, cette image chevauchant la partie transparente du cockpit de l'aéronef permettant une vision directe et la partie non transparente du cockpit, l'image collimatée coïncidant avec l'image réelle dans le champ de vision directe.

L'invention a pour principaux avantages qu'elle s'adapte à tous types d'aéronefs, qu'elle permet une amélioration du confort de vision des pilotes, qu'elle est simple à mettre en oeuvre et qu'elle est économique.

D'autres caractéristiques et avantages de l'invention apparaîtront à l'aide de la description qui suit faite en regard de dessins annexés qui représentent :
- la figure 1, un aéronef en phase d'approche du terrain ;
- la figure 2, une illustration du champ de vision du pilote de l'aéronef ;
- la figure 3, un premier exemple de réalisation possible d'un dispositif selon l'invention ;
- la figure 4, un deuxième exemple de réalisation possible d'un dispositif selon l'invention ;
- la figure 5, un champ de vision global produit par un dispositif selon l'invention.

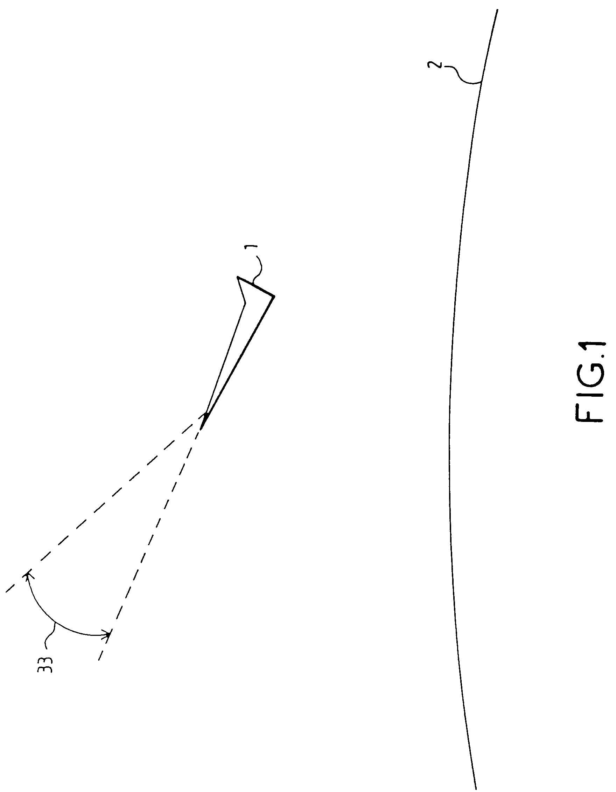

La figure 1 illustre un aéronef 1 en phase d'atterrissage vers une piste 2. L'aéronef présente un angle d'incidence relativement élevé. Le champ de vision du pilote 33 est alors nécessairement orienté vers le haut et ne lui permet pas par exemple un atterrissage à vue. Si de plus la surface vitrée est réduite, notamment par des contraintes aérodynamiques, alors, la difficulté est encore augmentée.

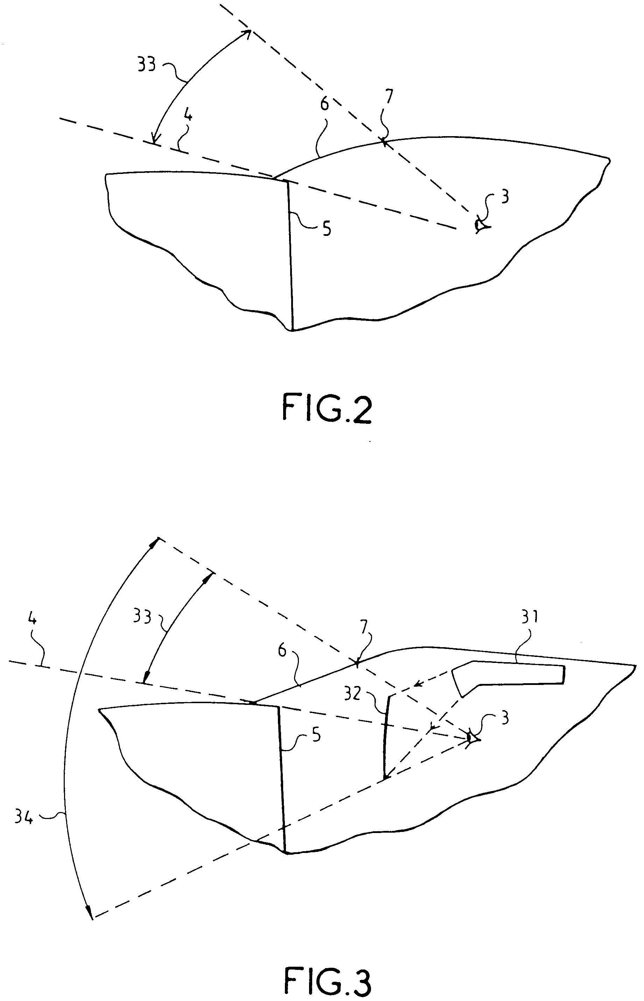

La figure 2 illustre le champ de vision du pilote. Le champ de vision 33, partant de l'oeil 3 du pilote est limité dans sa partie basse par une ligne 4 passant par le haut du tableau de bord 5. Le champ de vision commence donc à partir de cette ligne 4 et s'étend vers le haut à travers la surface vitrée disponible 6 du cockpit. Le champ est limité dans la partie supérieure par le haut 7 de la surface vitrée.

La figure 3 présente un premier mode de réalisation possible d'un dispositif selon l'invention. Ce dernier comprend au moins un collimateur tête haute 31, 32 relié par exemple à un capteur d'imagerie non représenté. Le projecteur 31 du collimateur étant situé en partie haute, au dessus du pilote, il projette une image collimatée sur un écran transparent semi-réfléchissant 32. L'image projetée est telle par exemple qu'elle se superpose, en partie ou en totalité, dans sa partie supérieure à la vision réelle 33 autorisée par la surface vitrée alors que sa partie inférieure se superpose au tableau de bord 5, l'image projetée dans cette partie inférieure correspondant à un champ de vision s'étendant vers le bas au-delà de la ligne inférieure 4 du champ de vision réelle. Ceci a pour effet de donner un champ de vision global 34 plus grand augmentant la vision vers le bas.

La reconstitution d'une vision analogue à la vision naturelle dans un grand champ angulaire englobant la zone de vision réelle met le pilote à même d'avoir une perception, une compréhension et un sens instructif de la situation de son avion meilleurs. Par ailleurs, la chaîne de génération et de présentation de l'image artificielle pourrait être sujette à des pannes, son raccordement par superposition totale ou partielle, dans certaines parties de son champ, avec la vision directe, réputée insensible aux pannes, permet de sécuriser cette image artificielle tout en augmentant la confiance de l'équipage.

Les parties inférieures du cockpit, notamment le tableau de bord, auxquelles se superpose l'image artificielle sont de préférence soignées pour ne pas gêner la vision de celle-ci, en choisissant par exemple des couleurs neutres et des éléments antireflets. Pendant l'utilisation de l'image artificielle collimatée, les instruments de bord situés dans son champ sont par exemple éteints, leurs informations vitales ou nécessaires étant alors incluses dans l'image collimatée. Ces dernières coïncident par exemple avec leur position réelle sur le tableau de bord.

L'image artificielle présente par exemple dans sa partie recouvrant des zones non transparentes du cockpit, uniquement des éléments d'espaces extérieurs utiles aux opérations prévues, notamment l'atterrissage. L'image artificielle est éteinte en phase de vol par exemple et seulement activée en début de phase d'atterrissage. Pendant cette phase l'image artificielle n'est par exemple pas activée en permanence au cas notamment où l'exploitation simultanée de l'image réelle et de l'image artificielle s'avère difficile pour le pilote. L'image artificielle peut alors être présentée séquentiellement. Elle peut être enlevée en totalité ou partiellement. Elle peut par exemple être enlevée dans sa partie superposée à la vision directe réelle et conservée dans sa partie superposée à la zone non transparente du cockpit. Dans tous les cas, la décision de conserver ou de faire disparaître, en partie ou en totalité, est laissée à la disposition du pilote.

Un capteur d'imagerie est par exemple une caméra de type télévision, celle-ci étant reliée au collimateur tête haute. Pour permettre des atterrissages par tous les temps, notamment par mauvaises conditions météorologiques entraînant une mauvaise visibilité, d'autres capteurs peuvent être utilisés. Ces derniers sont par exemple des capteurs infrarouges ou des radars millimétriques. Eventuellement, l'image fournie au collimateur peut être une image de synthèse obtenue par exemple à partir d'une base de données embarquée en fonction de la localisation de l'avion. Au lieu d'être embarquées, les données de l'image de synthèse peuvent par exemple être envoyées par une liaison hyperfréquence à l'approche d'un aéroport, les données étant par exemple envoyées à partir de celui-ci.

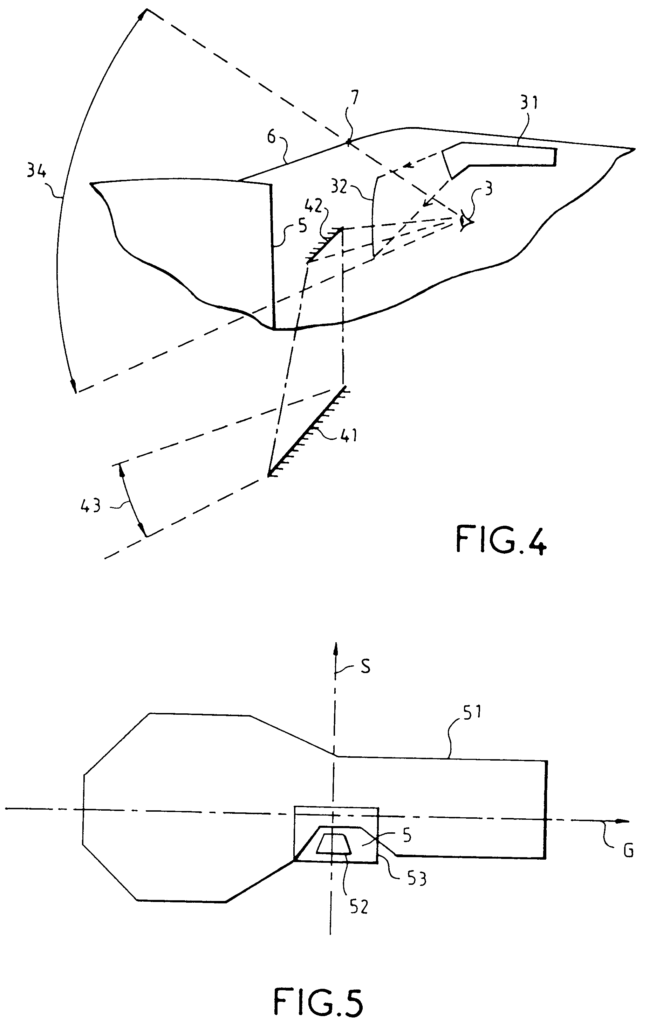

La figure 4 présente un autre mode de réalisation possible d'un dispositif selon l'invention. Par rapport à l'exemple de réalisation présenté par la figure 3, il comprend en plus un dispositif optique passif 41, 42 permettant une vision située en dessous de la ligne inférieure 4 du champ de vision directe. Ce dispositif optique passif est par exemple constitué de deux miroirs 41, 42 en regard comme dans un périscope, un premier 41 étant orienté vers l'espace extérieur inférieur à la ligne 4 précitée et le deuxième 42 étant orienté vers l'oeil 3 du pilote de façon à lui renvoyer l'image captée 43 par le premier miroir 41. Cette image captée 43 se superpose à l'image artificielle projetée par le collimateur. Le dispositif optique passif 41, 42 doit être tel qu'il donne une vision conforme du paysage, avec une parallaxe la plus faible possible afin que son image coïncide convenablement avec l'image artificielle superposée. La disparité résiduelle peut le cas échéant être compensée par distorsion volontaire de l'image artificielle. L'image du dispositif optique passif apparaît dans la zone intérieure du cockpit ne présentant pas de vision directe extérieure. Comme la vision directe supérieure l'assure dans la partie supérieure de l'image artificielle, l'image captée par ce dispositif optique sécurise l'image artificielle dans sa partie inférieure, là où la vision directe est impossible.

La figure 5 présente par rapport aux axes de site S et de gisement G différentes zones de vision possibles pouvant être produites par un dispositif du type de celui de la figure 4. Une première zone 51 correspond au champ de vision directe, à travers la surface transparente du cockpit de l'aéronef. Une deuxième zone 52, incluse dans la partie non transparente du cockpit correspond au champ de vision produit par le dispositif optique passif 41, 42. Une zone 53 chevauchant à la fois une portion de la partie transparente et une portion de la partie non transparente du cockpit, le tableau de bord 5 par exemple, correspond au champ de vision produit par le collimateur 31, 32. Cette zone 53 englobe par ailleurs le champ de vision 52 produit par le dispositif optique passif.

La zone 53 du collimateur couvre par exemple un champ de vision opérationnel permettant au pilote de réaliser un atterrissage en toute sécurité avec l'aide notamment du système avion.

Il peut être nécessaire d'adapter la luminance de l'image du collimateur au fond auquel elle se superpose : zones 5, 51 ou 52. Ceci peut être obtenu en agissant sur la luminance de l'image projetée, ou sur la transmission de la vitre du collimateur dans chaque zone concernée.

Toutefois, les zones présentées par la figure 5 sont adaptées à une position donnée du pilote, notamment de sa tête. Bien que cette position soit réputée stable, elle peut varier cependant. Pour résoudre ce problème, il est alors possible de prévoir sur l'image produite par le collimateur une zone périphérique de transition s'adaptant aux mouvements de tête du pilote en jouant par exemple dans cette zone sur l'indice de transmission de la vitre 32 du collimateur en fonction de l'angle de vision du pilote, ou sur la luminance de l'image projetée, selon la solution retenue pour discriminer les zones.

Les exemples de réalisation du dispositif selon l'invention présentés précédemment améliorent le champ de vision en l'augmentant notamment vers le bas. Cependant, tout dispositif selon l'invention peut augmenter le champ de vision suivant toutes les directions conformément aux besoins de sécurité des opérations concernées. Selon les directions envisagées, le projecteur n'est pas obligatoirement en partie haute mais à un endroit lui permettant de projeter l'image voulue.

## Revendications

1. Dispositif d'amélioration du champ de vision d'un pilote d'aéronef, comportant un collimateur (31, 32), le collimateur projetant une image (34, 53) de l'espace extérieur dans le champ de vision du pilote, caractérisé en ce que l'image collimatée chevauche la partie transparente (6, 51) du cockpit de l'aéronef permettant une vision directe et la partie non transparente du cockpit, l'image collimatée coïncidant avec l'image réelle dans le champ de vision directe.

2. Dispositif selon la revendication 1, caractérisé en ce que le projecteur (31) du collimateur est placé en position haute pour projeter une image couvrant en partie le tableau de bord (5) de l'aéronef.

3. Dispositif selon l'une quelconque des revendications précédentes, caractérisé en ce que l'image produite par le collimateur est activée séquentiellement.

4. Dispositif selon la revendication 3, caractérisé en ce que la partie de l'image collimatée chevauchant la partie non transparente est activée en permanence durant une opération donnée.

5. Dispositif selon la revendication 4, caractérisé en ce que l'opération est l'atterrissage.

6. Dispositif selon l'une quelconque des revendications précédentes, caractérisé en ce qu'il comporte en outre un dispositif optique passif (41, 42) produisant une image (52) de l'extérieur coïncidant avec l'image collimatée et se trouvant dans la partie non transparente du cockpit.

7. Dispositif selon la revendication 6, caractérisé en ce que le dispositif optique passif est composé de deux miroirs (41, 42) en regard, un premier (41) étant orienté vers l'espace extérieur et le deuxième (42) étant orienté vers l'oeil (3) du pilote.

8. Dispositif selon l'une quelconque des revendications 6 ou 7, caractérisé en ce que le dispositif optique passif (41, 42) produit une image de l'espace extérieur situé dans la partie inférieure avant de l'aéronef.

9. Dispositif selon l'une quelconque des revendications précédentes, caractérisé en ce que l'image collimatée couvrant une partie du tableau de bord et étant active, les indicateurs du tableau de bord sont éteints et les informations du tableau de bord nécessaires à l'opération en cours sont reproduites par le collimateur.

10. Dispositif selon la revendication 9, caractérisé en que les informations reproduites coïncident sur l'image collimatée avec leur position réelle sur le tableau de bord.

11. Dispositif selon l'une quelconque des revendications précédentes, caractérisé en ce que le capteur d'imagerie est une caméra de télévision.

12. Dispositif selon l'une quelconque des revendications précédentes, caractérisé en ce que le capteur d'imagerie est un capteur infrarouge.

13. Dispositif selon l'une quelconque des revendications précédentes, caractérisé en ce que le capteur d'imagerie est un radar à ondes millimétriques.

14. Dispositif selon l'une quelconque des revendications précédentes, caractérisé en ce que la vitre (32) du collimateur comporte une zone périphérique de transition permettant d'adapter l'image collimatée aux mouvements de tête du pilote.

15. Dispositif selon la revendication 14, caractérisé en ce que l'indice de transmission de la zone périphérique est fonction de l'angle de vision du pilote.

16. Dispositif selon la revendication 14, caractérisé en ce que dans la zone périphérique la luminance de l'image projetée est fonction de l'angle de vision du pilote.

17. Dispositif selon l'une quelconque des revendications précédentes, caractérisé en ce que l'image fournie au collimateur est une image de synthèse.

18. Dispositif selon la revendication 17, caractérisé en ce que l'image de synthèse est obtenue à partir d'une base de donnée embarquée et en fonction de la localisation de l'avion.
